# EUROPÄISCHE PATENTSCHRIFT

(11) **EP 1 317 988 B1**
(45) Veröffentlichungstag und Bekanntmachung des Hinweises auf die Patenterteilung: **03.08.2005**
(21) Anmeldenummer: 02400054.9
(22) Anmeldetag: 09.12.2002
(51) Int. Cl.: B23K 11/02, B60G 7/00

(54) **Bauteil bei Fahrwerkskomponenten mit einer durch Pressschweissen erzeugten Verbindung**
Component in vehicle parts with a joint achieved by pressure welding
Composant dans des pièces pour véhicule ayant un joint réalisé par soudure par pression

(30) Priorität: 10.12.2001 DE 20120098 U
(43) Veröffentlichungstag der Anmeldung: 11.06.2003
(73) Patentinhaber: Sachsenring Zwickau AG, 08058 Zwickau (DE)
(72) Erfinder: Strauch, Jürgen, 08115 Lichtentanne (DE); Wackes, Ulrich, 08115 Lichtentanne (DE)
(74) Vertreter: Rumrich, Gabriele, Dipl.-Ing.

(56) Entgegenhaltungen:
- EP-A- 0 074 224
- GB-A- 1 537 957
- JP-A- 9 011 721

## Beschreibung

Die Erfindung betrifft eine Bauteilverbindung bei Fahrwerkskomponenten nach dem Oberbegriff des 1. Patentanspruchs (siehe z.B. JP 2000337416).

Es ist bekannt, dass Verbindungsstäbe bei Fahrwerkskomponenten aus Vollmaterial oder Rohr bestehen können. Dabei werden die Verbindungsstäbe mit der Außenkontur der metallischen Aufnahmehülsen z.B. durch Pressschweißverfahren oder MAG- Schweißen verbunden. Dabei ist eine geeignete Schweißnahtvorbereitung entscheidend für die Qualität der Schweißverbindung. Zur Herstellung einer Pressschweißverbindung von Rohren müssen diese mit einer Polkappe versehen werden.

Aufgabe der Erfindung ist es, eine Pressschweißverbindung zwischen einer Aufnahmehülse, insbesondere Für Gummi-/Metallverbindungen oder Kugelgelenke und einem als Rohr ausgebildeten Verbindungsstab zu entwickeln, wobei auf die Polkappe verzichtet werden kann.

Die Bauteilverbindung besteht im wesentlichen aus einer Aufnahmehülse für Gummi-/ Metallverbindungen oder Kugelgelenke und einem Verbindungsrohr. Erfindungsgemäß weist die Aufnahmehülse an der Fügeposition an ihrer Außenkontur einen Ringbuckel auf, wobei das in Richtung zur Aufnahmehülse weisende Rohrende offen ist und das Rohrende mit dem Ringbuckel durch Pressschweißen verbunden ist. Dabei kann z. B. die Ringfläche des Rohrendes mit dem Ringbuckel verbunden sein.

Das Rohrende des Verbindungsrohres kann dabei eine nach innen gerichtete und/oder nach außen gerichtete Phase aufweisen.

Der Durchmesser des Verbindungsrohres kann sich in Richtung zum Ringbuckel verjüngen.

Es ist auch möglich, dass das Rohrende einen nach innen oder nach außen weisenden abgewinkelten Bereich aufweist, und dass die, in Richtung zur Aufnahmehülse weisende Fläche des abgewinkelten Bereiches, am Ringbuckel anliegt und mit diesem verbunden ist. In diesen Fall können auch zentrisch zueinander zwei Ringbuckel unterschiedlichen Durchmessers in der Aufnahmehülse angeordnet sein, die beide mit dem abgewinkelten Bereich des Verbindungsrohres durch Pressschweißen verbunden sind.

An der Innenseite der Aufnahmehülse, dem Ringbuckel gegenüberliegend, ist eine Ringnut eingebracht.

Der Ringbuckel weist vorteilhafter Weise einen, dem Querschnitt des Rohres angepassten Verlauf auf und ist mittig oder außermittig in der Wandungshöhe ausgerichtet.

Die Abmessungen des Ringbuckels können dabei der Belastung der Bauteilverbindung angepasst werden.

Es ist möglich, die Aufnahmehülse ein- oder beidseitig mit einem Rollrand zu versehen. Weiterhin kann die Aufnahmehülse einseitig geschlossen sein.

Verfahrensgemäß erfolgt die Herstellung der Bauteilverbindung durch Pressschweißen, wobei zuerst durch ein Umformverfahren der Wandung der Aufnahmehülse an ihrer Außenkontur im Bereich der Fügeposition eine Ringwulst erzeugt wird, anschließend das, auf die Aufnahmehülse weisende Rohrende, auf dem Ringbuckel positioniert wird und abschließend das Pressschweißen von Aufnahmehülse und Verbindungsrohr erfolgt.

Dabei wird in die Aufnahmehülse ein Werkzeug mit einer Ringwulst eingelegt, am Außendurchmesser der Aufnahmehülse ein Gegenwerkzeug mit einer zur Ringwulst fluchtenden Nut angelegt wonach dass Werkzeug und Gegenwerkzeug mit einer Umformkraft gegen die Wandung gepresst werden, so dass sich die Ringwulst des Werkzeuges in die Wandung einformt und der Werkstoff aus der Bauteilwandung in die Nut des Gegenwerkzeuges fließt.

Der Verlauf des erzeugten Ringbuckels oder der auf einem teilkreisliegenden Einzelbuckel liegt parallel zur damit zu verbindenden Fläche der Aufnahmehülse, wodurch eine sichere Verbindung gewährleistet wird.

Mit der erfindungsgemäßen Lösung wird eine überraschend einfache und zuverlässige Bauteilverbindung hergestellt. Das aufwendige Anbringen einer Polkappe auf das Rohrende ist nicht mehr erforderlich.

Die Erfindung wird nachfolgend anhand von Ausführungsbeispielen und zugehörigen Zeichnungen näher erläutert. Es zeigen:
- Fig. 1:: Querschnitt einer Bauteilverbindung, wobei die Ringfläche des Rohrendes mit dem Ringbuckel verbunden ist,
- Fig. 2:: Schnitt A-A gemäß Fig. 1,
- Fig. 3:: Bauteilverbindung, wobei das Rohrende des Verbindungsrohres eine nach innen gerichtete Phase aufweist,
- Fig. 4:: Bauteilverbindung, mit einem rechtwinklig nach innen abgewinkelten Bereich des Rohrendes.

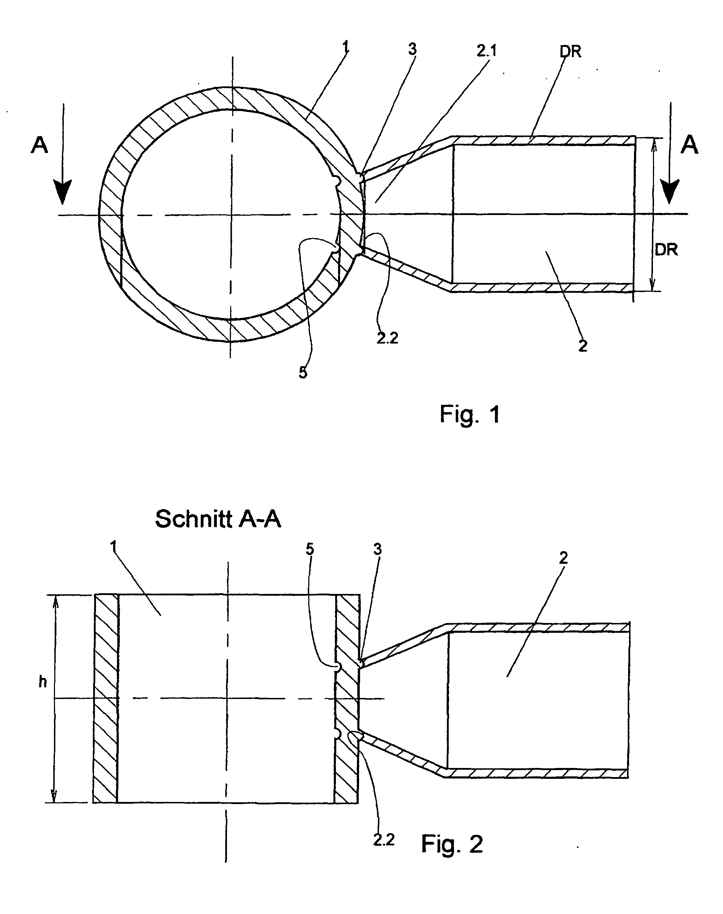

Fig. 1 zeigt eine Aufnahmehülse 1 für ein Gummi-/Metallelement oder ein Kugelgelenk, welches mit einem Rohr 2 verbunden ist, wobei die Aufnahmehülse 1 an der Fügeposition einen Ringbuckel 3 aufweist. Das in Richtung zur Aufnahmehülse 1 weisende Rohrende 2.1 ist offen und die Ringfläche 2.2 des Rohrendes 2.1 mit dem Ringbuckel 3 verbunden. Der Außendurchmesser DR verjüngt sich dabei in Richtung zum Ringbuckel 3. An der Innenseite 1.2 der Aufnahmehülse 1 ist fluchtend zum Ringbuckel 3 eine Ringnut 5 ausgebildet. Den Schnitt A-A gemäß Fig. 1 zeigt Fig. 2, dabei ist erkennbar, dass der Ringbuckel 3, und somit die Bauteilverbindung, mittig in der Wandhöhe h der Aufnahmehülse 1 sitzt.

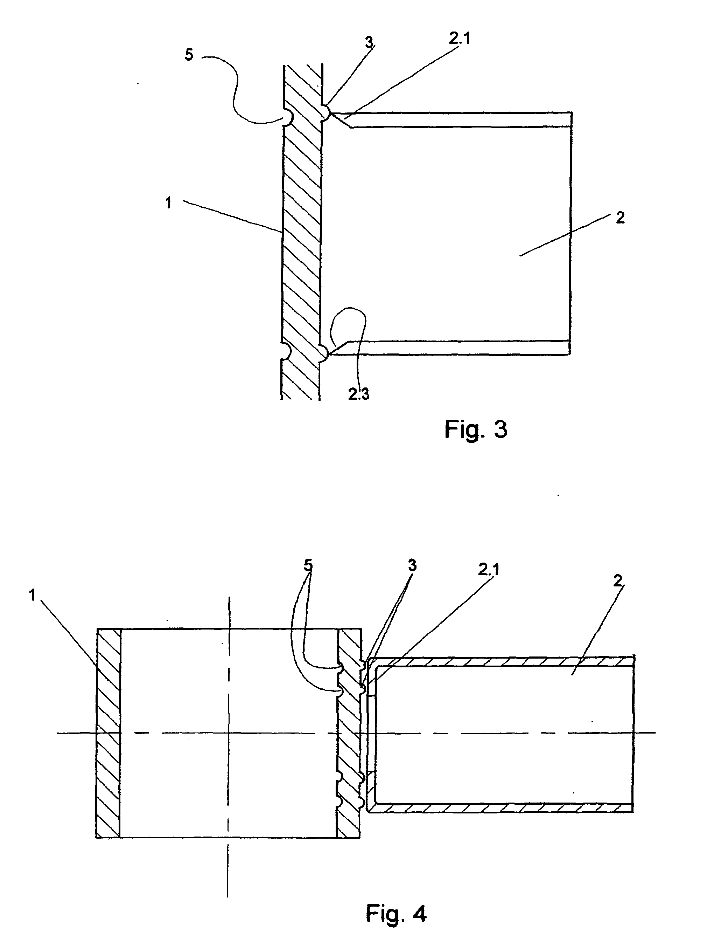

In Fig. 3 ist eine vergrößerte Darstellung des Querschnitts der Fügeposition dargestellt. Der Wandverlauf des Rohres 2 ist geradlinig und das Rohrende 2.1 des Verbindungsrohres 2 weist eine nach innen gerichtete Phase 2.3 auf.

In Fig. 4 wird der Längsschnitt einer Verbindung zwischen einer Aufnahmehülse 1 und einem Rohr 2 gezeigt, bei welcher die Aufnahmehülse 1 zwei zentrisch zueinander angeordnete Ringbuckel 3 aufweist. Das Verbindungsrohr 2 ist an seinem Ende 2.1 rechtwinklig nach innen abgewinkelt, so dass die entstandene, abgewinkelte Ringfläche, die in Richtung zur Aufnahmehülse 1 reicht, jeweils beide Ringbuckel 3 überdeckt und mit diesen verbunden ist.

Bei der Herstellung des/der Ringbuckel 3 ist zu gewährleisten, dass diese so ausgeformt werden, dass deren Verlauf parallel zur damit zu verbindenden Fläche der Aufnahmehülse 2 liegt.

Alternativ zu einem umlaufenden Ringbuckel ist es auch möglich, mehrere auf einem Teilkreis liegende, voneinander beabstandete Einzelbuckel vorzusehen.

## Patentansprüche

1. Bauteilverbindung bei Fahrwerkskomponenten, im wesentlichen bestehend aus einer Aufnahmehülse (1), insbesondere für Gummi-/ Metallverbindungen oder Kugelgelenke und einem Verbindungsrohr (2), **dadurch gekennzeichnet, dass** die Aufnahmehülse (1) an der Fügeposition an ihrer Außenkontur (1.1) einen Ringbuckel (3) oder mehrere Einzelbuckel aufweist, dass das in Richtung zur Aufnahmehülse (1) weisende Rohrende (2.1) offen ist und das Rohrende (2.1) mit dem Ringbuckel (3) oder mit den Einzelbuckeln durch Pressschweißen verbunden ist.

2. Bauteilverbindung nach Anspruch 1, **dadurch gekennzeichnet, dass** die Ringfläche (2.2) des Rohrendes (2.1) mit dem Ringbuckel (3) oder mit den Einzelbuckeln verbunden ist.

3. Bauteilverbindung nach Anspruch 1 oder 2, **dadurch gekennzeichnet, dass** das Rohrende (2.1) des Verbindungsrohres (2) eine nach innen gerichtete und/oder nach außen gerichtete Phase (2.3) aufweist.

4. Bauteilverbindung nach einem der Ansprüche 1 bis 3, **dadurch gekennzeichnet, dass** sich der Durchmesser (Dv) des Verbindungsrohres (2) in Richtung zum Ringbuckel (3) oder zu den Einzelbuckeln verjüngt.

5. Bauteilverbindung nach einem der Ansprüche 1 bis 4, **dadurch gekennzeichnet, dass** das Rohrende (2.1) einen nach innen oder nach außen weisenden abgewinkelten Bereich (2.3) aufweist, und dass die in Richtung zur Aufnahmehülse weisende Fläche (2.4) des abgewinkelten Bereiches (2.3) am Ringbuckel (3) oder an den Einzelbuckeln anliegt und mit diesen verbunden ist.

6. Bauteilverbindung nach Anspruch 5, **dadurch gekennzeichnet, dass** zentrisch zueinander zwei Ringbuckel (3) unterschiedlichen Durchmessers (D) oder auf Teilkreisen unterschiedlichen Durchmessers liegende Einzelbuckel in der Aufnahmehülse angeordnet sind, die beide mit dem abgewinkelten Bereich (2.3) des Verbindungsrohres (2) durch Pressschweißen verbunden sind.

7. Bauteilverbindung nach einem oder mehreren der Ansprüche 1 bis 6, **dadurch gekennzeichnet, dass** an der Innenseite (1.2) der Aufnahmehülse (1), dem Ringbuckel (3) gegenüberliegend, eine Ringnut (5) eingebracht ist.

8. Bauteilverbindung nach einem oder mehreren der Ansprüche 1 bis 7, **dadurch gekennzeichnet, dass** der Ringbuckel (3) oder die Einzelbuckel einen, dem Querschnitt des Rohres (2) angepassten Verlauf aufweist.

9. Bauteilverbindung nach einem oder mehreren der Ansprüche 1 bis 8, **dadurch gekennzeichnet, dass** der Ringbuckel (3) oder die Einzelbuckel mittig oder außermittig in der Wandungshöhe (h) der Aufnahmehülse (1) ausgerichtet ist.

10. Bauteilverbindung nach einem oder mehreren der Ansprüche 1 bis 9, **dadurch gekennzeichnet, dass** die Abmessungen des Ringbuckels (3) der Belastung der Bauteilverbindung anpassbar sind.

11. Bauteilverbindung nach einem der Ansprüche 1 bis 10, **dadurch gekennzeichnet, dass** die Aufnahmehülse (1) ein- oder beidseitig mit einem Rollrand versehen ist.

12. Bauteilverbindung nach einem oder mehreren der Ansprüche 1 bis 11, **dadurch gekennzeichnet, dass** die Aufnahmehülse (1) einseitig geschlossen ist.

13. Bauteilverbindung nach einen oder mehreren Ansprüchen 1 bis 12, **dadurch gekennzeichnet, dass** der Verlauf des Ringbuckels (3) oder der auf einen Teilkreis liegenden Einzelbuckel parallel zu der damit zu verbindenden Fläche der Aufnahmehülse (2) liegt.

## Claims

1. A connection for a component in chassis components, substantially consisting for a receiving sleeve (1), especially for rubber / metal connections or ball-and-socket joints and a connection tube (2), **characterized in that** the receiving sleeve (1) comprises an annular bulge (3) or several individual bulges at the joining position at its outside contour (1.1), that the tube end (2.1) facing in the direction of the receiving sleeve (1) is open and that the tube end (2.1) is connected with the annular bulge (3) or with the individual bulges by pressure welding.

2. A connection for a component according to claim 1, **characterized in that** the annular surface (2.2) of the tube end (2.1) is connected with the annular bulge (3) or with the individual bulge.

3. A connection for a component according to claim 1 or 2, **characterized in that** the tube end (2.1) of the connection tube (2) comprises an inwardly and/or outwardly facing phase (2.3).

4. A connection for a component according to one of the claims 1 to 3, **characterized in that** the diameter (DV) of the connecting tube (2) tapers in the direction towards the annular bulge (3) or the individual bulges.

5. A connection for a component according to one of the claims 1 to 4, **characterized in that** the tube end (2.1) comprises an inwardly or outwardly facing bent-off region (2.3), and that the surface (2.4) of the bent-off region (2.3) facing in the direction toward the receiving sleeve rests on the annular bulge (3) or the individual bulges and is joined to the same.

6. A connection for a component according to claim 5, **characterized in that** two annular bulges (3) of different diameter (D) are arranged centrically with respect to each other or individual bulges situated on partial circles of different diameter are arranged in the receiving sleeve, which are both connected with the bent-off region (2.3) of the connection tube (2) by pressure welding.

7. A connection for a component according to one or several of the claims 1 to 6, **characterized in that** an annular groove (5) is provided in the inner side (1.2) of the receiving sleeve (1), opposite of the annular bulge (3).

8. A connection for a component according to one or several of the claims 1 to 7, **characterized in that** the annular bulge (3) or the individual bulges have a progress adjusted to the cross section of the tube (2).

9. A connection for a component according to one or several of the claims 1 to 8, **characterized in that** the annular bulge (3) or the individual bulges are aligned in the center or off-center in the wall height (h) of the receiving sleeve (1).

10. A connection for a component according to one or several of the claims 1 to 9, **characterized in that** the dimensions of the annular bulge (3) can be adjusted to the load on the connection of the component.

11. A connection for a component according to one of the claims 1 to 10, **characterized in that** the receiving sleeve (1) is provided with a welt on one or both sides.

12. A connection for a component according to one or several of the claims 1 to 11. **characterized in that** the receiving sleeve (1) is sealed off on one side.

13. A connection for a component according to one or several of the claims 1 to 12, **characterized in that** the progress of the annular bulge (3) or the individual bulges situated on a partial circle lies parallel to the surface of the receiving sleeve (2) to be connected.

## Revendications

1. Assemblage de pièces pour des composants de châssis, composé pour l'essentiel d'une douille de logement (1), en particulier pour des assemblages de caoutchouc et de métal ou d'articulations à rotule, et d'un tube de liaison (2), **caractérisé en ce que** la douille de logement (1) présente dans la position du joint sur son contour extérieur (1.1) un bossage annulaire (3) ou plusieurs bossages séparés, **en ce que** l'extrémité du tube (2.1) orientée en direction de la douille de logement (1) est ouverte et l'extrémité du tube (2.1) est reliée au bossage annulaire (3) ou aux bossages séparés par soudage sous pression.

2. Assemblage de pièces selon la revendication 1, **caractérisé en ce que** la surface annulaire (2.2) de l'extrémité du tube (2.1) est reliée au bossage annulaire (3) ou aux bossages séparés.

3. Assemblage de pièces selon la revendication 1 ou 2, **caractérisé en ce que** l'extrémité (2.1) du tube de liaison (2) possède un chanfrein (2.3) orienté vers l'intérieur et/ou vers l'extérieur.

4. Assemblage de pièces selon l'une quelconque des revendications 1 à 3, **caractérisé en ce que** le diamètre (Dv) du tube de liaison (2) diminue en direction du bossage annulaire (3) ou des bossages séparés.

5. Assemblage de pièces selon l'une quelconque des revendications 1 à 4, **caractérisé en ce que** l'extrémité de tube (2.1) possède une zone coudée (2.3) orientée vers l'intérieur ou vers l'extérieur, et **en ce que** la surface (2.4) de la zone coudée (2.3) orientée vers la douille de logement repose sur le bossage annulaire (3) ou sur les bossages séparés et est reliée à ceux-ci.

6. Assemblage de pièces selon la revendication 5, **caractérisé en ce qu'**il est prévu deux bossages annulaires (3) centrés l'une par rapport à l'autre et de diamètre (D) différent ou des bossages séparés disposés sur des parties de cercle de diamètre différent dans la douille de logement, qui sont reliés tous les deux par soudage sous pression avec la zone coudée (2.3) du tube de liaison (2).

7. Assemblage de pièces selon une ou plusieurs des revendications 1 à 6, **caractérisé en ce qu'**il est prévu une gorge annulaire (5) ménagée dans la face intérieure (1.2) de la douille de logement (1), en face du bossage annulaire (3).

8. Assemblage de pièces selon une ou plusieurs des revendications 1 à 7, **caractérisé en ce que** le bossage annulaire (3) ou les bossages séparés possèdent un contour adapté à la section du tube (2).

9. Assemblage de pièces selon une ou plusieurs des revendications 1 à 8, **caractérisé en ce que** le bossage annulaire (3) ou les bossages séparés sont orientés vers le centre ou décentrés dans la hauteur de paroi (h) de la douille de logement (1).

10. Assemblage de pièces selon une ou plusieurs des revendications 1 à 9, **caractérisé en ce que** les dimensions du bossage annulaire (3) peuvent être adaptées aux contraintes exercées sur l'assemblage de pièces.

11. Assemblage de pièces selon l'une quelconque des revendications 1 à 10, **caractérisé en ce que** la douille de logement (1) est pourvue d'un bord roulé sur une face ou les deux.

12. Assemblage de pièces selon une ou plusieurs des revendications 1 à 11, **caractérisé en ce que** la douille de logement (1) est fermée d'un côté.

13. Assemblage de pièces selon une ou plusieurs des revendications 1 à 12, **caractérisé en ce que** le contour du bossage annulaire (3) ou du bossage séparé se trouvant dans une partie de cercle est parallèle à la surface de la douille de logement (2) qu'il doit servir à assembler.
